# EUROPÄISCHE PATENTSCHRIFT

(11) **EP 3 935 268 B1**
(45) Veröffentlichungstag und Bekanntmachung des Hinweises auf die Patenterteilung: **17.07.2024**
(21) Anmeldenummer: 20720766.3
(22) Anmeldetag: 15.04.2020
(51) Int. Cl.: F01P 5/06, F01P 7/12

(54) **KÜHLVORRICHTUNG FÜR EIN KRAFTFAHRZEUG**
COOLING DEVICE FOR A MOTOR VEHICLE
DISPOSITIF DE REFROIDISSEMENT DESTINÉ À UN VÉHICULE À MOTEUR

(30) Priorität: 15.04.2019 DE 102019205431
(43) Veröffentlichungstag der Anmeldung: 12.01.2022
(73) Patentinhaber: Brose Fahrzeugteile SE & Co. Kommanditgesellschaft, Würzburg, 97076 Würzburg (DE)
(72) Erfinder: SPRINGER, Nils, 26129 Oldenburg (DE); DREESEN, Thomas, 26135 Oldenburg (DE)
(74) Vertreter: FDST Patentanwälte
(86) Internationale Anmeldenummer: PCT/EP2020/060525
(87) Internationale Veröffentlichungsnummer: WO 2020/212382

(56) Entgegenhaltungen:
- DE-A1- 102005 024 444
- DE-A1- 102005 041 595
- DE-A1- 102007 036 475
- JP-A- S63 270 228
- US-A- 5 839 397

## Beschreibung

Die Erfindung betrifft eine Kühlvorrichtung zur Kühlung eines elektrisch angetriebenen oder antreibbaren eines Kraftfahrzeugs. Unter Kraftfahrzeug wird hierbei insbesondere ein Elektrofahrzeug mit einem von einer aufladbaren Batterie gespeisten Elektromotor, oder ein Hybridfahrzeug mit einem Elektromotor und mit einem Verbrennungsmotor verstanden.

Die Kühlvorrichtung eines Verbrennungsmotors, insbesondere eines Kraftfahrzeugs, führt hauptsächlich diejenige Wärme ab, welche an die Brennraum- oder Zylinderwände abgegeben wird. Da zu hohe Temperaturen den Motor beschädigen würden, muss der Verbrennungsmotor gekühlt werden. Moderne Verbrennungsmotoren, insbesondere Viertaktmotoren in Kraftfahrzeugen, werden, allenfalls mit wenigen Ausnahmen, flüssigkeitsgekühlt, wobei als Kühlmittel zum Halten der Betriebstemperatur des Verbrennungsmotors und auch für den Betrieb einer Klimaanlage in der Regel ein Gemisch aus Wasser sowie Frost- und Korrosionsschutzmittel zum Einsatz kommt.

Das in Rohren, die in das Kühlernetz oder Kühlerpaket eines Kühlers eingearbeitet sind, geleitete Kühlmittel muss wiederum gekühlt werden, wozu Kühlluft über Kühlrippen streicht, die im Wärmeaustausch zu dem Kühlmittel stehen. Da insbesondere bei geringen Geschwindigkeiten des Kraftfahrzeugs der als Kühlluft dienende Fahrtwind zur Kühlung normalerweise nicht ausreicht, ist es z. B. aus der DE 10 2013 006 499 U1 bekannt, an dem die Kühlrippen umfassenden Kühler einen Axiallüfter innerhalb einer Kühlerzarge anzuordnen. Der vorzugsweise elektromotorisch angetriebene Axiallüfter erzeugt einen zusätzlichen Luftstrom, wobei die Kühlerzarge eine Anzahl an Staudruckklappenöffnungen aufweist, welche mit Staudruckklappen verschließbar sind. Bei geöffneten Staudruckklappen und vergleichsweise hohen Fahrzeuggeschwindigkeiten ist aufgrund geringer Verblockung eine verringerte Kühlflächenabdeckung sowie eine große frei durchströmbare Fläche und somit eine erhöhte Kühlleistung ermöglicht.

Der Axiallüfter ist in Fahrtrichtung typischerweise hinter dem Kühlernetz oder Kühlpaket des Kühlers (Wärmeaustauscher) angeordnet. Mit Hilfe eines Lüfterrads des Lüfters wird die Luft durch das Kühlernetz hindurch gesaugt und auf den Verbrennungsmotor gelenkt. Falls zusätzlich zum Kühlernetz noch ein Kondensatornetz eines Verflüssigers einer Klimaanlage vorhanden ist, so wird üblicherweise das Kondensatornetz in Fahrtwindrichtung (Luftströmrichtung) vor dem Kühlernetz angeordnet. Eine derartige Anordnung wird in der DE 10 2005 041595 A1 gezeigt.

Elektrisch beziehungsweise elektromotorisch angetriebene oder antreibbare Kraftfahrzeuge, wie beispielsweise Elektro- oder Hybridfahrzeuge, umfassen üblicherweise einen Elektromotor als elektrisches Antriebssystem, mit dem eine oder beide Fahrzeugachsen antreibbar sind. Zum Zwecke einer Versorgung mit elektrischer Energie ist der Elektromotor typischerweise mit einer fahrzeuginternen (Hochvolt-)Batterie als elektrischen Energiespeicher gekoppelt. Unter einer Batterie ist hier und im Folgenden insbesondere eine wiederaufladbare, elektrochemische Sekundärbatterie, beispielsweise ein Akkumulator, zu verstehen.

Derartige Elektromotoren als elektrische Antriebsmaschinen erzeugen im Betrieb eine vergleichsweise geringe Abwärme, wodurch im Vergleich zu Verbrennungsmotoren lediglich eine geringe Kühlleistung der Kühlvorrichtung benötigt wird. Bei elektrisch angetriebenen oder antreibbaren Kraftfahrzeugen tritt jedoch das zusätzliche Problem auf, dass die Batterie bei einer hohen Batterietemperatur, beispielsweise höher als 45 °C, beginnt zu degenerieren. Dies bedeutet, dass bei derartig erhöhten Temperaturen elektrochemische Reaktionen innerhalb der Batterie auftreten, welche die Batterie beschädigen oder vollständig zerstören.

Zur Verbesserung der Elektromobilität sind bei Elektro- oder Hybridfahrzeugen häufig sogenannte Schnellladebetriebe gewünscht, bei welchem die fahrzeuginterne Batterie innerhalb einer möglichst kurzen Zeitdauer aufgeladen wird. Im Zuge einer solchen Schnellladung treten vergleichsweise hohe Stromstärken auf, welche in der Folge während des Ladeprozesses eine Erhöhung der Batterietemperatur bewirken.

Die Ladung der Batterie erfolgt in der Regel bei einem Fahrzeugstillstand, so dass kein Fahrtwind zur Kühlung vorhanden ist. Um die Kühlleistung im (Schnell-) Ladebetrieb der Batterie zu verbessern ist es beispielsweise möglich, mittels eines Axiallüfters einen kühlenden Luftstrom durch einen Wärmetauscher zu erzeugen. Nachteiligerweise wird durch einen solchen Axiallüfter jedoch eine vergleichsweise hohe Geräuschbelastung bewirkt.

Des Weiteren weisen gewöhnlichen Kühlvorrichtungen im Ladebetrieb aufgrund des fehlenden Fahrwindes eine vergleichsweise geringe Kühlleistung auf, wodurch es somit häufig notwendig ist, nach einer gewissen Ladezeit die Stromstärke des Ladestroms zu reduzieren, um Überhitzungen und Degradierungen der Batterie zu vermeiden. Dadurch werden Ladezeiten des Kraftfahrzeugs nachteilig erhöht. Der Erfindung liegt die Aufgabe zugrunde, eine besonders geeignete Kühlvorrichtung (Kühlmodul) für ein elektrisch angetriebenes oder antreibbares Kraftfahrzeug, insbesondere für ein Elektro- oder Hybridfahrzeug, anzugeben. Des Weiteren soll ein Verfahren zum Betreib einer solchen Kühlvorrichtung angegeben werden, welche in allen Arbeitsbereichen des Kraftfahrzeug möglichst effektiv (Leistungseffektiv) arbeitet. Insbesondere soll beim Ladebetrieb der Batterie eines vorgesehenen elektromotorischen Antriebs die Geräuschentwicklung der Kühlvorrichtung (des Kühlmoduls) möglichst gering sein, diese also möglichst geräuscharm (leise) arbeiten.

Hinsichtlich der Kühlvorrichtung wird die Aufgabe mit den Merkmalen des Anspruchs 1 und 2 und hinsichtlich des Verfahrens mit den Merkmalen des Anspruchs 11 erfindungsgemäß gelöst. Vorteilhafte Ausgestaltungen und Weiterbildungen sind Gegenstand der jeweiligen Unteransprüche.

Die erfindungsgemäße Kühlvorrichtung ist zur Kühlung eines elektrisch oder elektromotorisch angetriebenen oder antreibbaren Kraftfahrzeugs, insbesondere eines Elektro- oder Hybridfahrzeugs, geeignet und eingerichtet. Das Kraftfahrzeug weist hierbei einen von einer aufladbaren Batterie gespeisten Elektromotor auf, wobei die nachfolgend auch als Kühlmodul bezeichnete Kühlvorrichtung insbesondere zur Kühlung der Batterie und des Elektromotors vorgesehen ist.

Die Kühlvorrichtung weist einen ersten Wärmetauscher und einen zweiten Wärmetauscher auf. Die Wärmetauscher sind vorzugsweise separat oder getrennt voneinander ausgeführt. Die Wärmetauscher sind hierbei jeweils als ein von Kühlmittel durchflossenes Kühlernetz oder Kühlpaket, also als Kühler, ausgeführt. Die Wärmetauscher sind beispielsweise an einen gemeinsamen Kühlkreislauf des Kraftfahrzeugs angeschlossen oder anschließbar. Dies bedeutet, dass die Wärmetauscher insbesondere räumlich voneinander getrennt angeordnet sind, jedoch kühlmitteltechnisch miteinander gekoppelt sein können.

Die Kühlvorrichtung weist weiterhin einen den ersten Wärmetauscher und den zweiten Wärmetauscher verbindenden Luftführungskanal auf. Der Luftführungskanal verbindet die Wärmetauscher hierbei insbesondere strömungstechnisch oder strömungsdynamisch. Dies bedeutet, dass ein Luftstrom mittels des Luftführungskanals zwischen den Wärmetauschern geführt oder führbar ist. Der Luftführungskanal weist zwei diametral gegenüberliegende Durchgangsöffnungen auf, welche mittels einer ersten Luftführung und einer zweiten Luftführung reversibel verschließbar beziehungsweise offenbar sind. Die Durchgangsöffnungen sind hierbei im Bereich des zweiten Wärmetauschers angeordnet.

Ein Kühlerlüfter ist strömungstechnisch oder strömungsdynamisch hinter dem zweiten Wärmetauscher angeordnet. Mit anderen Worten ist der Kühlerlüfter in Luftströmungsrichtung der Kühlluft hinter dem zweiten Kühler bzw. Wärmetauscher und dabei in einer parallelen Ebene zu dessen Rückseite angeordnet. Hierbei ist die axiale Ansaugöffnung des Kühlerlüfters dem zweiten Kühler bzw. Wärmetauscher, also dessen Rückseite zugewandt.

Durch die Anordnung der Wärmetauscher, des Luftführungskanals und des Kühlerlüfters ist eine besonders geeignete Kühlvorrichtung für ein elektrisch oder elektromotorisch angetriebenes oder antreibbares Kraftfahrzeug realisiert. Insbesondere sind durch die bewegbaren Luftführungen unterschiedliche Strömungspfade für einen geführten Luftstrom realisierbar, so dass je nach Betriebssituation des Kraftfahrzeugs eine optimale Kühlung ermöglicht ist.

Im Nachfolgenden sind Angaben hinsichtlich der Raumrichtungen auch insbesondere in einem Koordinatensystem des Kraftfahrzeugs (Fahrzeugkoordinatensystem) bezüglich einer beispielhaften Einbausituation zwischen einem Kühlergrill und einem Elektromotor oder einer Batterie angegeben. Die Abszissenachse (X-Achse, X-Richtung) ist hierbei entlang der Fahrzeuglängsrichtung (Fahrrichtung) und die Ordinatenachse (Y-Achse, Y-Richtung) entlang der Fahrzeugquerrichtung sowie die Applikatenachse (Z-Achse, Z-Richtung) entlang der Fahrzeughöhe orientiert.

Der erste Wärmetauscher und der zweite Wärmetauscher bilden die Stirnseiten des länglichen, etwa zylinder- oder rohrartigen Luftführungskanals, wobei die Durchgangsöffnungen und deren jeweils zugeordnete Luftführung insbesondere diametral gegenüberliegend an den Seitenflächen des Luftführkanals angeordnet sind. Die Durchgangsöffnungen sind bezogen auf die sich zwischen den Wärmetauschern erstreckende Längsrichtung des Luftführkanals etwa quer oder radial orientiert in die Seitenwände eingebracht. Die Durchgangsöffnungen sind bezogen auf die Fahrzeughöhe (Z) insbesondere an einer oberen und unteren Seite des Luftführungskanals angeordnet.

Die Luftführungen sind hierbei insbesondere jeweils als eine um eine Dreh- oder Schwenkachse bewegbare oder verschwenkbare Klappe oder Deckel, beispielsweise als ein Ablenkblech oder eine Ablenkklappe, ausgeführt. Die Luftführungen sind hierbei jeweils zwischen einer Schließstellung und einer Offenstellung bewegbar oder verschwenkbar. In der Schließstellung liegen die Luftführungen an den Seitenwänden des Luftführungskanals derart an, dass die zugeordnete Durchgangsöffnung strömungstechnisch verschlossen oder abgedeckt ist. In der Schließstellung kann somit kein Luftstrom durch die zugeordnete Durchgangsöffnung fließen. In der jeweiligen Offenstellung sind die Luftführungen derart verschwenkt oder bewegt, dass die Durchgangsöffnungen zumindest teilweise geöffnet sind, wodurch ein Luftstrom durch diese hindurchfließen kann. Die Luftführungen werden zum Öffnen insbesondere von dem Luftführungskanal weg bewegt oder verschwenkt.

Die Wärmetauscher weisen bezogen auf die Fahrtrichtung des Kraftfahrzeugs (X), dies bedeutet bezogen auf dessen Hauptbewegungsrichtung, eine Vorderseite und eine Rückseite auf. Die Vorderseite des ersten Wärmetauschers ist hierbei beispielsweise einem fahrzeugfrontseitigen Kühlergrill zugewandt, wobei die Rückseite des ersten Wärmetauschers dem Luftführungskanal, und somit dem zweiten Wärmetauscher zugewandt ist. Die Vorderseite des zweiten Wärmetauschers ist dem Luftführungskanal und der Rückseite des ersten Wärmetauschers zugewandt, wobei die Rückseite des zweiten Wärmetauschers dem Einlass des Radiallüfters zugewandt ist.

In einer vorteilhaften Ausführung ist der Kühlerlüfter als ein Radiallüfter ausgeführt. Mit anderen Worten ist ein Radiallüfter ist als Kühlerlüfter strömungstechnisch oder strömungsdynamisch hinter dem zweiten Wärmetauscher angeordnet.

Unter einem Radiallüfter ist hier und im Folgenden ein Kühlerlüfter zu verstehen, welcher Kühlluft axial ansaugt und - nach erfolgter Umlenkung (90°-Umlenkung) - radial ausfördert. Dies bedeutet, dass der Radiallüfter in radialer Richtung nach außen fördert (ausbläst). Radiallüfter weisen im Gegensatz zu Axiallüftern eine geringere Geräuschentwicklung auf. Insbesondere erzielen Radiallüfter bei gleicher Luftleistung deutlich geringere Schalldruckpegel. Dadurch ist eine geräuschreduzierte Kühlvorrichtung realisiert.

Unter "axial" wird hierbei eine Richtung parallel (koaxial) zur Drehachse (Axialrichtung) des Radiallüfters und unter "radial" eine Richtung senkrecht (quer) zur Drehachse (Radialrichtung) des Radiallüfters verstanden. Die Lüfterdrehachse verläuft wiederum in Längsrichtung zum Führungskanal, also etwa parallel zur Fahrtrichtung des Kraftfahrzeugs.

In einer geeigneten Einbausituation ist der Radiallüfter in einem unteren Bereich des Kraftfahrzeugs, also nahe dem Untergrund, angeordnet, wodurch im Betrieb eine weitere Reduzierung der Geräuschentwicklung bewirkt ist.

In vorteilhafter Ausführungsform ist der nachfolgend auch als Radiallüfter bezeichnete Kühlerlüfter der Kühlvorrichtung elektromotorisch angetrieben. Für eine besonders raumsparende Ausgestaltung des Radiallüfters, insbesondere für eine möglichst geringe Baugröße des Kühlerlüfters in Axialrichtung, sind die zum Antrieb deren Laufräder dienenden Elektromotoren beispielsweise in einer Lüfternabe eines Radiallaufrades des Radiallüfters angeordnet. Dadurch ist ein besonders bauraumkompakter Radiallüfter realisiert.

In einer bevorzugten Ausführungsform weist die Kühlvorrichtung keinen Axiallüfter auf. Mit anderen Worten ist die Kühlvorrichtung axiallüfterlos ausgeführt. Somit ist der Radiallüfter der einzige vorhandene Kühlerlüfter der Kühlvorrichtung. Dadurch ist eine besonders geräuscharme (leise) Kühlvorrichtung gewährleistet.

Laut Erfindung ist der zweite Wärmetauscher gegenüber dem ersten Wärmetauscher unter einem Neigungswinkel geneigt angeordnet. Dies bedeutet, dass die Wärmetauscher nicht parallel sondern schräg oder verkippt zueinander angeordnet sind. Beispielsweise ist der zweite Wärmetauscher gegenüber dem ersten Wärmetauscher um einen Neigungswinkel von 30° bis 60°, insbesondere etwa 45°, geneigt angeordnet.

Durch die Neigung des zweiten Wärmetauschers wird das Strömungsverhalten der Kühlvorrichtung insbesondere hinsichtlich eines durch die zweite Durchgangsöffnung in den Luftführungskanal eintretenden Luftstroms verbessert. Insbesondere treten somit weniger Verwirbelungen oder Turbulenzen im Bereich des zweiten Wärmetauschers auf.

In einer geeigneten Weiterbildungsform weist der zweite Wärmetauscher eine gegenüber dem ersten Wärmetauscher reduzierte Querschnittsfläche auf. Mit anderen Worten weist der zweite Wärmetauscher einen kleineren Strömungsquerschnitt als der erste Wärmetauscher auf.

In einer zweckmäßigen Ausgestaltung ist die erste Luftführung gegenüberliegend und um 180° gedreht zur zweiten Luftführung angeordnet. Dies bedeutet, dass die Luftführungen etwa punktsymmetrisch zueinander angeordnet sind. Dadurch ist eine strömungstechnisch besonders vorteilhafte Anordnung der Luftführungen realisiert. Die Öffnungs- oder Schwenkwinkel der Luftführungen sind hierbei insbesondere an den verfügbaren Bauraum der gewünschten Einbausituation angepasst.

Die Luftführungen sind beispielsweise als scharniergelenkartig angelenkte Klappen ausgeführt. Die Luftführungen weisen hierbei ein Dreh- oder Schwenkgelenk als Festende und ein damit beweg- oder verschwenkbares Klappenblatt auf. Die Dreh- oder Schwenkachsen der Luftführungen sind parallel zueinander orientiert. Die Luftführungen sind um 180° gedreht zueinander angeordnet, so dass sie im Wesentlichen gegensinnig am Luftführungskanal angelenkt sind. Das Gelenk der ersten Luftführung ist insbesondere zum ersten Wärmetauscher hin versetzt angeordnet, so dass das Freiende des Klappenblatts der ersten Luftführung in der Schließstellung im Bereich des zweiten Wärmetauschers angeordnet ist. Das Gelenk der zweiten Luftführung ist im Bereich des zweiten Wärmetauschers angeordnet, so dass das Freiende des Klappenblatts der zweiten Luftführung in der Schließstellung zum ersten Wärmetauscher hin orientiert ist.

In einer vorteilhaften Ausbildung ist eine Verschließvorrichtung zum strömungstechnischen Verschließen des ersten Wärmetauschers vorgesehen. Die Verschließvorrichtung ist beispielsweise als eine Jalousie oder als ein Klappensystem ausgestaltet. Durch die Verschließvorrichtung ist der erste Wärmetauscher und somit eine Stirnseite des Luftführkanals strömungstechnisch verschließbar, so dass kein Luftstrom von dieser Seite in den Luftführkanal eintreten kann. Dadurch ist es beispielsweise möglich, lediglich einen Luftstrom über die zweite Durchgangsöffnung zum zweiten Wärmetauscher und dem Radiallüfter zu führen, was insbesondere in Betriebssituationen mit lediglich geringen oder moderaten Kühlanforderungen, wie beispielsweise bei einer Langsamfahrt oder bei einem Standbetrieb bei moderaten Außen- und Umgebungstemperaturen, vorteilhaft ist. Dadurch ist eine besonders geräuscharme und strömungsgünstige Anordnung realisiert.

In einer geeigneten Ausgestaltung ist der Luftführungskanal durch die Luftführungen und/oder den Kühlerlüfter sowie vorzugsweise die Verschließvorrichtung zwischen drei unterschiedlichen Strömungspfaden umschaltbar. Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Durch die Verschließvorrichtung und die zwei Luftführungen sowie den Radiallüfter wirkt der Luftführungskanal für den geführten oder geförderten Luftstrom nach Art eines Dreiwegeventils. Insbesondere sind somit je nach Fahr- oder Betriebssituation in einfacher Art und Weise unterschiedliche Kühlleistungen realisierbar, so dass stets eine optimale und effektive Kühlung des Elektromotors und/oder der Batterie gewährleistet ist.

Der erste Strömungspfad ist bei offener Verschließvorrichtung und geschlossenen Luftführungen sowie eingeschalteten Radiallüfter gebildet. Der erste Strömungspfad erstreckt sich somit vom ersten Wärmetauscher zum zweiten Wärmetauscher und dem Radiallüfter. Im Betrieb des Radiallüfters wird in dieser (Ein-) Stellung der Kühlvorrichtung somit Luft über beide Wärmetauscher angesaugt, wodurch eine besonders hohe Kühlleistung möglich ist. Dies ist insbesondere bei einem Ladeoder Schnellladebetrieb der Batterie vorteilhaft. Durch den prinzipbedingten hohen Druckaufbau mittels des Radiallüfters ist eine hohe Kühlleistung mit niedriger Aufnahmeleistung möglich. Dadurch ist ein besonders geräuscharmer Betrieb der Kühlvorrichtung bei gleichzeitig hoher Kühlleistung realisiert.

Der zweite Strömungspfad ist bei offener Verschließvorrichtung und geöffneter ersten Luftführung sowie verschlossener zweiten Luftführung und ausgeschalteten Radiallüfter realisiert. Bei ausgeschalteten oder nicht betriebenen Radiallüfter verblockt dieser hinsichtlich eines axialen Luftstroms. Dadurch wird der Luftstrom in Richtung des Radiallüfters beziehungsweise in Richtung des zweiten Wärmetauschers gesperrt. Somit wird der Luftstrom vom ersten Wärmetauscher durch den Luftführungskanal über die erste Durchgangsöffnung hinausgeführt. Diese (Ein-)Stellung der Kühlvorrichtung ist insbesondere im Fahrbetrieb des Kraftfahrzeugs vorteilhaft, bei welchem der vom Fahrwind erzeugte Luftstrom lüfterlos über den ersten Wärmetauscher geführt werden kann. Der Fahrtwind kann den ersten Wärmetauscher also frei durchströmen. Da hinter dem ersten Wärmetauscher kein Lüfter als Strömungswiderstand angeordnet ist, ist in dieser Stellung der Kühlvorrichtung lüfterlos eine hohe Kühlleistung erzielbar.

Der dritte Strömungspfad ist bei geschlossener Verschließvorrichtung und geschlossener ersten Luftführung sowie geöffneter zweiten Luftführung und eingeschalteten Radiallüfter realisiert. Dadurch wird die Luft über die zweite Durchgangsöffnung an den zweiten Wärmetauscher angesaugt. Somit ist ein besonders geräuscharmer und durch den Verschluss des ersten Wärmetauschers auch strömungstechnisch vorteilhafter Betrieb der Kühlvorrichtung ermöglicht, welche insbesondere für geringe Kühlanforderungen geeignet ist.

Vorzugsweise sind auch Kombinationen aus diesen drei Stellungen oder Strömungspfaden möglich. Insbesondere erfolgt das Umschalten zwischen den Stellungen oder Strömungspfaden kontinuierlich, so dass prinzipiell auch jede Zwischenstellung zwischen den Strömungspfaden möglich ist.

Laut Erfindung ist die erste Luftführung druckgesteuert betätigbar. Mit anderen Worten ist die erste Luftführung druckgesteuert zwischen der Schließstellung und der Offenstellung verschwenkbar. Dadurch ist eine passive Steuerung der ersten Luftführung realisiert, wodurch eine aufwandsreduzierte und kostengünstige Kühlvorrichtung ermöglicht ist.

Die erste Luftführung ist hierbei insbesondere als eine Staudruckklappe ausgeführt und derart ausgestaltet und dimensioniert, dass sie bei einem hinreichend großen Fahrtwind aufgedrückt wird. Mit anderen Worten öffnet die erste Luftführung selbsttätig die erste Durchgangsöffnung, wenn der Fahrtwind eine ausreichende Geschwindigkeit erreicht. Dadurch ist es möglich, ohne ein zusätzliches Stellmittel zwischen dem ersten und zweiten Strömungspfad der Kühlvorrichtung zu wechseln.

Ein zusätzlicher oder weiterer Aspekt der Erfindung sieht einen Controller, also eine Steuereinheit vor, der dazu eingerichtet ist, in Abhängigkeit des Fahrbetriebs (Fahrzyklus) oder des Arbeitsbereichs des Kraftfahrzeugs die erste Luftführung und/oder die zweite Luftführung sowie den Radiallüfter und vorzugsweise die Verschließvorrichtung anzusteuern und/oder zu regeln. Dies bedeutet, dass die Luftführungen und die Verschließvorrichtung sowie der Radiallüfter als Komponenten der Kühlvorrichtung mittels des Controllers aktiv steuerbar und/oder regelbar sind.

Der Controller ist hierbei allgemein - programm- und/oder schaltungstechnisch - zur Ansteuerung der Komponenten eingerichtet. Der Controller ist somit konkret dazu eingerichtet in Abhängigkeit der jeweiligen Betriebssituation, also in Abhängigkeit des Fahrbetriebs oder des Arbeitsbereichs, die Verschließvorrichtung und/oder die Luftführungen zu öffnen oder zu schließen sowie den Radiallüfter anund auszuschalten, also zwischen den drei Strömungspfaden umzuschalten.

In einer bevorzugten Ausgestaltungsform ist der Controller zumindest im Kern durch einen Mikrocontroller mit einem Prozessor und einem Datenspeicher gebildet, in dem die Funktionalität zur Durchführung der Ansteuerung der Komponenten in Form einer Betriebssoftware (Firmware) programmtechnisch implementiert ist, so dass das Verfahren - gegebenenfalls in Interaktion mit einem Vorrichtungsnutzer - bei Ausführung der Betriebssoftware in dem Mikrocontroller automatisch durchgeführt wird.

Der Controller kann im Rahmen der Erfindung alternativ aber auch durch ein nichtprogrammierbares elektronisches Bauteil, wie zum Beispiel einem anwendungsspezifischen integrierten Schaltkreis (ASIC), gebildet sein, in dem die Funktionalität zur Durchführung der Ansteuerung der Komponenten mit schaltungstechnischen Mitteln implementiert ist.

Die aktuelle Betriebssituation, also der Fahrbetrieb oder der Arbeitsbereich des Kraftfahrzeugs, wird vorzugsweise über externe Sensormittel, also Sensormittel welche nicht zur Kühlvorrichtung gehören, erfasst und an den Controller gesendet. Die Betriebssituation wird hierbei beispielsweise anhand der Fahrgeschwindigkeit, der Temperatur des Kühlmittels, die Anforderungen an die (Fahrzeug)Klimaanlage und/oder der Batterietemperatur bestimmt.

In einer geeigneten Ausführung ist ein Schwellwert der Fahrzeuggeschwindigkeit oder des Arbeitsbereichs vorgegeben. Der Schwellwert ist geeigneterweise in einem Speicher des Controllers hinterlegt. Oberhalb des Schwellwerts ist die erste Luftführung geöffnet und die zweite Luftführung geschlossen sowie der Radiallüfter ausgeschaltet. Mit anderen Worten ist oberhalb des Schwellwertes der zweite Strömungspfad eingestellt. Unterhalb des Schwellwertes sind die erste Luftführung und die zweite Luftführung, insbesondere beim Ladebetrieb einer Batterie für einen elektromotorischen Antrieb des Kraftfahrzeugs, geschlossen und der Radiallüfter eingeschaltet. Dies bedeutet, dass die Kühlvorrichtung bei einem Unterschreiten des Schwellwerts auf den ersten Strömungspfad umschaltet. Dadurch ist ein besonders zweckmäßiger und stets kühloptimierter Betrieb der Kühlvorrichtung und eines damit ausgestatteten Kraftfahrzeugs gewährleistet.

Das erfindungsgemäße Verfahren ist zum Betrieb der vorstehend beschriebenen Kühlvorrichtung geeignet und eingerichtet. Das Verfahren wird hierbei insbesondere von dem Controller ausgeführt. Mit anderen Worten ist der Controller geeignet und eingerichtet das erfindungsgemäße Verfahren auszuführen.

Verfahrensgemäß ist es vorgesehen, dass in Abhängigkeit des Arbeitsbereichs, der elektromotorischen Belastung, des jeweiligen Fahrzyklus und/oder der Geschwindigkeit des Kraftfahrzeugs der Radiallüfter betrieben und/oder die erste Luftführung und/oder die zweite Luftführung betätigt werden. Dadurch ist ein besonders geeignetes Verfahren zum Betrieb der Kühlvorrichtung realisiert.

In einer geeigneten Weiterbildung des Verfahrens werden oberhalb eines Schwellwertes der Geschwindigkeit des Kraftfahrzeugs der Radiallüfter ausgeschaltet sowie die erste Luftführung geöffnet und die zweite Luftführung geschlossen. Die Kühlvorrichtung wird also beispielswiese bei einer Schnellfahrt auf den zweiten Strömungspfad eingestellt. Bei höherer, hoher und/oder maximaler Fahrzeuggeschwindigkeit, d. h. bei einer Schnellfahrt oder bei hoher Belastung des Elektromotors, z. B. bei Bergfahrten und/oder bei einer zusätzlichen Beanspruchung aufgrund eines vom Fahrzeug gezogenen Anhängers, eignet sich besonders der passive Betrieb durch die Fahrwinddurchströmung des ersten Wärmetauschers, um den Elektromotor zu kühlen.

Unterhalb des Schwellwertes der Geschwindigkeit, beispielsweise bei einer Langsamfahrt oder einem Stillstand des Fahrzeugs, wird die erste Luftführung geschlossen und die zweite Luftführung geöffnet sowie der Radiallüfter eingeschaltet. Dadurch wird eine ausreichende Kühlleistung beispielsweise an einer roten Ampel oder in einem Fahrzeugstau gewährleistet, bei welchem kein ausreichender Fahrtwind zur Kühlung vorhanden ist.

In einer bevorzugten Ausbildung des Verfahrens werden bei einem Kraftfahrzeug mit einem von einer aufladbaren Batterie gespeisten Elektromotor im Ladebetrieb der Batterie beide Luftführungen geschlossen und der Radiallüfter betrieben beziehungsweise eingeschaltet. Im Ladebetrieb wird die Kühlvorrichtung also auf den ersten Strömungspfad eingestellt. Dadurch wird die vom Radiallüfter geförderte Luft sowohl durch den ersten Wärmetauscher als auch durch den zweiten Wärmetauscher geführt, wodurch eine besonders hohe Kühlleistung ermöglicht ist. Dadurch wird die Batterie auch während eines Schnellladens zuverlässig und betriebssicher gekühlt. Insbesondere im Ladebetrieb ist beim elektromotorischen Radiallüfter das Verhältnis von (aerodynamischer) Kühlleistung und (elektrischer) Leistungsaufnahme besonders günstig, d. h. der Radiallüfter arbeitet hierbei besonders effizient.

Nachfolgend ist ein Ausführungsbeispiel der Erfindung anhand einer Zeichnung näher erläutert. Darin zeigen in schematischen und vereinfachten Darstellungen:
- Fig. 1: ein elektrisch betriebenes Kraftfahrzeug mit einer einen Elektromotor speisenden Batterie und mit einer Kühlvorrichtung,
- Fig. 2: die Kühlvorrichtung in einer ersten Einstellung,
- Fig. 3: die Kühlvorrichtung in einer zweiten Einstellung, und
- Fig. 4: die Kühlvorrichtung in einer dritten Einstellung.

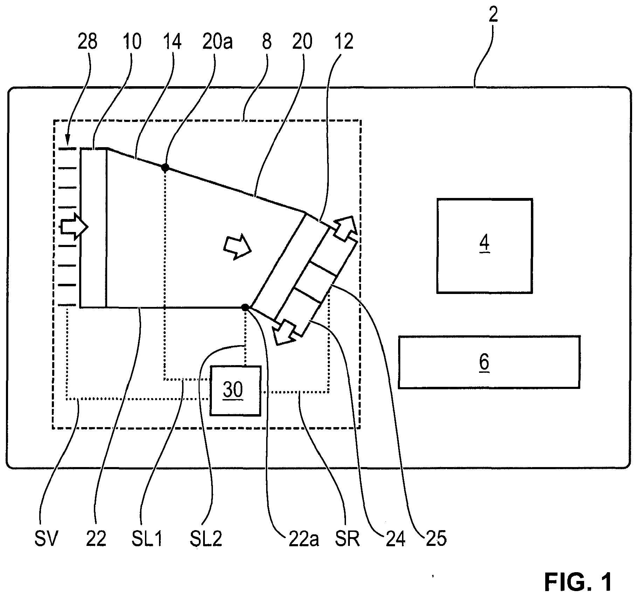

In der Fig. 1 ist in einer schematischen und vereinfachen Darstellung ein elektrisch oder elektromotorisch betriebenes Kraftfahrzeug 2, insbesondere ein Elektrofahrzeug, gezeigt. Das Kraftfahrzeug 2 weist einen Elektromotor 4 als Antriebssystem und eine Batterie 6 als elektrischen Energiespeicher zur Versorgung des Elektromotors 4 auf. Zur Kühlung des Elektromotors 4 und/oder der Batterie 6 weist das Kraftfahrzeug weiterhin ein Kühlmodul oder eine Kühlvorrichtung 8 als Kühler- oder Kühlerlüftersystem auf. Mittels der Kühlvorrichtung 8 wird ein Fahrtwind verstärkt oder bei einem Stillstand des Kraftfahrzeugs 2 ein Luftstrom erzeugt. Der Fahrtwind beziehungsweise der Luftstrom ist in den Figuren schematisch anhand von Pfeilen dargestellt.

Im Nachfolgenden sind Angaben hinsichtlich der Raumrichtungen auch insbesondere in einem Koordinatensystem des Kraftfahrzeugs (Fahrzeugkoordinatensystem) bezüglich einer beispielhaften Einbausituation zwischen einem Kühlergrill und einem Elektromotor oder einer Batterie angegeben. Die Abszissenachse (X-Achse, X-Richtung) ist hierbei entlang der Fahrzeuglängsrichtung (Fahrrichtung) und die Ordinatenachse (Y-Achse, Y-Richtung) entlang der Fahrzeugquerrichtung sowie die Applikatenachse (Z-Achse, Z-Richtung) entlang der Fahrzeughöhe orientiert.

Die Kühlvorrichtung 8 umfasst einen nachfolgend als Kühler 10 bezeichneten ersten Wärmetauscher und einen nachfolgend als Kühler 12 bezeichneten zweiten Wärmetauscher. Der Wärmetauscher oder Kühler 10 ist zu einer Fahrzeugfrontseite hin orientiert. Der Kühler 12 ist zu dem Fahrzeuginneren, insbesondere zu dem Elektromotor 4 und der Batterie 6 hin orientiert angeordnet.

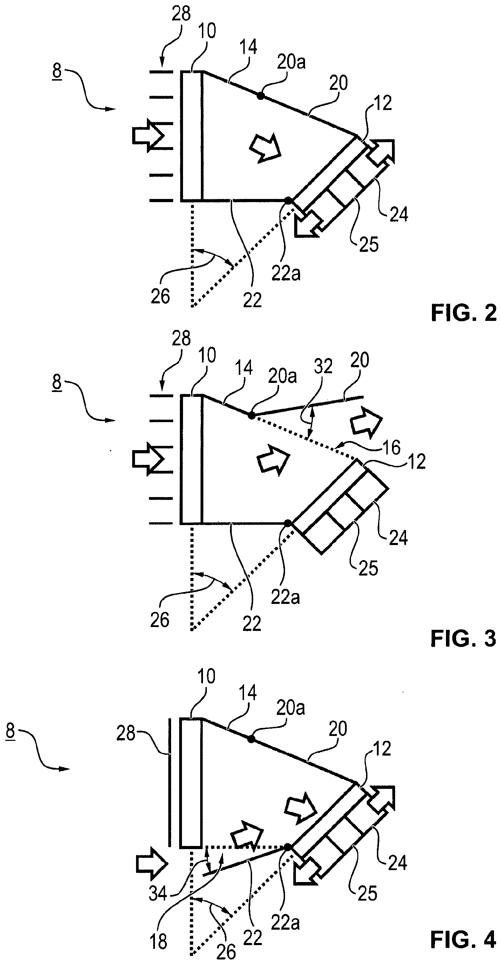

Zwischen den Kühlern 10 und 12 ist ein diese verbindender Luftführungskanal 14 vorgesehen. Der Luftführungskanal 14 weist zwei seitliche Durchgangsöffnungen 16 und 18 (Fig. 3, Fig. 4) auf, welche diametral gegenüberliegend zueinander an dem Luftführungskanal 14 angeordnet sind. Die Durchgangsöffnung 16 ist in die obere Seitenwand des Luftführungskanals 14, also in der entlang der Fahrzeughöhe (Z) höher angeordneten Seitenwand, eingebracht. Die Durchgangsöffnung 18 ist entsprechend gegenüberliegend in die untere Seitenwand des Luftführungskanals 14, also in der entlang der Fahrzeughöhe (Z) tiefer angeordneten Seitenwand, eingebracht.

Die Durchgangsöffnungen 16, 18 sind mittels jeweils einer klappenartigen Luftführung 20, 22 strömungstechnisch oder strömungsdynamisch verschließbar oder abdeckbar. Die Luftführungen 20, 22 sind hierbei insbesondere jeweils als eine um eine Dreh- oder Schwenkachse 20a, 22a bewegbare oder verschwenkbare Klappe oder Deckel, beispielsweise als ein Ablenkblech oder eine Ablenkklappe, ausgeführt. Die Luftführungen 20, 22 sind hierbei jeweils zwischen einer Schließstellung (Fig. 2) und einer Offenstellung (Fig. 3, Fig. 4) bewegbar oder verschwenkbar.

In der Schließstellung sind die Durchgangsöffnungen 16, 18 von der jeweils zugeordneten Luftführung 20, 22 strömungstechnisch verschlossen. In der Schließstellung kann somit kein Luftstrom durch die verschlossenen Durchgangsöffnungen 16, 18 strömen. In der jeweiligen Offenstellung sind die Luftführungen 20, 22 derart verschwenkt oder bewegt, dass die Durchgangsöffnungen 16, 18 zumindest teilweise geöffnet sind, so dass ein Luftstrom seitlich in den Luftführungskanal 14 ein- oder austreten kann.

Die Luftführungen 20 und 22 sind gegenüberliegend und um 180° gedreht zueinander angeordnet. Dies bedeutet, dass die Luftführungen 20, 22 etwa punktsymmetrisch zueinander am Luftführungskanal 14 angeordnet sind. Die (obere) Luftführung 20, welche die Durchgangsöffnung 16 verschließt, verschwenkt oder öffnet entgegen der Fahrzeuglängsrichtung (X) und entlang der Fahrzeughöhe (Z). Die Luftführung 20 öffnet den Luftführungskanal 14 also nach hinten und oben (Fig. 3). Die (untere) Luftführung 22, welche die Durchgangsöffnung 18 verschließt, verschwenkt oder öffnet entsprechend in Fahrzeuglängsrichtung (X) und entgegen der Fahrzeughöhe (Z). Bei geöffneter zweiter Luftführung 22 ist der Luftführungskanal 14 also nach vorne und unten geöffnet (Fig. 4).

Die Kühler 10 und 12 weisen bezogen auf die Fahrtrichtung (X) des Kraftfahrzeugs 2, dies bedeutet bezogen auf dessen Hauptbewegungsrichtung, eine Vorderseite und eine Rückseite auf. Die Vorderseite des Kühlers 10 ist hierbei beispielsweise einem Kühlergrill zugewandt, wobei die Rückseite des Kühlers 12 in den Luftführungskanal 14 mündet, und somit der Vorderseite des Kühlers 12 zugewandt ist.

An der Rückseite des Kühlers 12 ist ein Radiallüfter 24 als Kühlerlüfter angeordnet. Der Einlass des Radiallüfters 24 schließt hierbei an die Rückseite des Kühlers 12 an. Der Radiallüfter 24 weist einen elektromotorischen Antrieb 25 auf.

Der Kühler 10 ist im Wesentlichen parallel zu einer Fahrzeugfront, also parallel zu der YZ-Ebene des Kraftfahrzeugs 2 angeordnet. Der Kühler 10 ist hierbei insbesondere hinter einem nicht näher gezeigten Kühlergrill des Kraftfahrzeugs 2 angeordnet. Der Kühler 12 ist gegenüber dem Kühler 10 unter einem Neigungswinkel 26 geneigt angeordnet (Fig. 2 bis Fig. 4). Dies bedeutet, dass die Kühler 10 und 12 nicht parallel sondern schräg oder verkippt zueinander angeordnet sind.

Der Kühler 12 weist eine gegenüber dem Kühler 10 reduzierte Querschnittsfläche auf. Mit anderen Worten weist der Kühler 12 einen kleineren Strömungsquerschnitt als der Kühler 10 auf.

Der Kühler 10 ist frontseitig mittels einer Verschließvorrichtung 28 strömungstechnisch oder strömungsdynamisch verschließbar. Die Verschließvorrichtung 28 ist in dem gezeigten Ausführungsbeispiel als eine Jalousie, also als eine Anordnung von beweglichen Lamellen, ausgeführt.

An die Kühler 10, 12 sind nicht näher gezeigte Kühlrohre oder Kühlschläuche geführt, in denen sich ein Kühlmittel (eine Kühlflüssigkeit), welches (welche) mittels einer nicht dargestellten Pumpe in Zirkulation gehalten wird, befindet. Das Kühlmittel wird durch den Elektromotor 4 und die Batterie 6 geleitet und von diesen erwärmt, wobei der Elektromotor 4 und die Batterie 6 gekühlt werden. Das erwärmte Kühlmittel wird erneut durch die Kühler 10 und 12 geleitet.

Die Kühlvorrichtung 8 weist einen Controller 30 als Steuergerät oder Steuervorrichtung auf, welche den Betrieb der Kühlvorrichtung 8 steuert und/oder regelt. Hierzu sind die Luftführungen 20, 22 und die Verschließvorrichtung 28 sowie der Radiallüfter 24 steuerbar und/oder regelbar ausgeführt. Dies bedeutet, dass Controller 30 im Betrieb der Kühlvorrichtung 8 entsprechende (An-)Steuersignale SR, SV, SL1, SL2 an den Radiallüfter 24 bzw. dessen Antrieb 25 und an die Verschließvorrichtung 28 sowie an die Luftführungen 20, 22 sendet.

Mittels der Steuersignale SR ist der Radiallüfter 24 beziehungsweise dessen elektromotorischer Antrieb 25 ein- und ausschaltbar, insbesondere wird durch das Steuersignal SR die Drehzahl des Antriebs 25 eingestellt und/oder geregelt. Die Steuersignale SV öffnen oder schließen die Verschließvorrichtung 28. Die Steuersignale SL1 öffnen oder schließen die obere Luftführung 20 und die Steuersignale SL2 öffnen oder schließen die untere Luftführung 22. Zum öffnen und schließen, also zur Betätigung der Verschließvorrichtung 28 und/oder Luftführungen 20, 22 sind diese jeweils mit einem nicht näher gezeigten Stellmittel, beispielsweise mit einem Elektromotor, gekoppelt.

Die Luftführung ist für eine druckgesteuerte Betätigung eingerichtet .

Mit anderen Worten ist die Luftführung 20 druckgesteuert zwischen der Schließstellung und der Offenstellung verschwenkbar. Zu diesem Zwecke ist die Luftführung 20 insbesondere als eine Staudruckklappe ausgeführt und derart ausgestaltet und dimensioniert, dass sie bei einem hinreichend großen Fahrtwind aufgedrückt wird. Dadurch ist es möglich, die Luftführung 20 auch ohne Aktivierung eines Stellmittels, also ohne die Steuersignale SL1, dies bedeutet passiv, zu betätigen.

Die Ansteuerung der Komponenten 20, 22, 24 und 28 erfolgt hierbei abhängig von der Fahrsituation, dem jeweiligen Arbeitsbereich, der Arbeitsbelastung (z. B. bei Bergfahrt und/oder bei Fahrt mit einem Anhänger) und dabei vorzugsweise in Abhängigkeit von der Geschwindigkeit des Kraftfahrzeugs 2. Die Steuerung und/oder Regelung der Kühlvorrichtung 8, also das Verfahren zum Betrieb der Kühlvorrichtung 8, ist nachfolgend anhand der Fig. 2 bis Fig. 4 näher erläutert.

Die Kühlvorrichtung 8 ist dazu geeignet und eingerichtet zwischen drei Strömungspfaden des Luftführungskanals 14 umzuschalten. Diese Umschaltung ist insbesondere durch den Controller geregelt und/oder gesteuert. Die Umschaltung von einem Strömungspfad auf einen anderen erfolgt hierbei in Abhängigkeit des Arbeitsbereichs und/oder der Geschwindigkeit des Kraftfahrzeugs.

Mit den unterschiedlichen Strömungspfaden sind unterschiedliche Kühlleistungen der Kühlvorrichtung 8 realisiert. Die Strömungspfade entsprechen also unterschiedlichen Betriebseinstellungen oder Betriebsmodi der Kühlvorrichtung 8, welche entsprechend der jeweiligen Betriebs- oder Fahrsituation eingestellt werden können.

Der erste Strömungspfad des Luftführkanals 14 beziehungsweise die erste Einstellung der Kühlvorrichtung 8 ist für hohe Kühlleistungen bei hohen Temperaturbelastungen (Hochtemperaturanforderungen), insbesondere bei einem Fahrzeugstillstand, vorzugsweise bei einem Lade- oder Schnellladevorgang der Batterie 6, geeignet und eingerichtet. In einer solchen Betriebssituation steht kein Fahrwind zur Verfügung, so dass die Kühlvorrichtung 8 einen kühlenden Luftstrom mittels des Radiallüfters 24 über beide Kühler 10, 12 erzeugt.

Der zweite Strömungspfad des Luftführkanals 14 beziehungsweise die zweite Einstellung der Kühlvorrichtung 8 ist insbesondere für hohe Kühlleistungen, insbesondere bei einer Fahrt des Kraftfahrzeugs 2 mit hoher oder maximaler Fahrzeuggeschwindigkeit (Schnellfahrt), vorgesehen. In einer derartigen Betriebssituation ist die Kühlvorrichtung 8 in einem passiven Betrieb, bei welchem der Elektromotor 4 und/oder die Batterie 6 lüfterlos durch die Fahrwinddurchströmung des Kühlers 10 gekühlt sind.

Der dritte Strömungspfad des Luftführkanals 14 beziehungsweise die dritte Einstellung der Kühlvorrichtung 8 ist insbesondere für niedrige oder moderate Kühlleistungen, beispielsweise bei einer Langsamfahrt oder bei einem Stillstand des Kraftfahrzeugs 2, vorgesehen. In dieser Einstellung wird ein lediglich über den Kühler 12 geführter Luftstrom vom Radiallüfter 24 erzeugt. Dieser Betrieb ist besonders effizient und sehr geräuscharm.

Die drei unterschiedlichen Strömungspfade oder Einstellungen sind in den Figu-ren 2 bis 4 gezeigt, wobei auch Kombinationen aus diesen drei Strömungspfaden oder Einstellungen möglich sind. Insbesondere erfolgt das Umschalten zwischen den Strömungspfaden kontinuierlich, so dass prinzipiell auch jede Zwischenstellung zwischen den Strömungspfaden einstellbar ist.

Die Fig. 2 zeigt den ersten Strömungspfad des Luftführkanals 14 oder die erste Einstellung der Kühlvorrichtung 8, bei welchem die Verschließvorrichtung 28 geöffnet und die Luftführungen 20, 22 geschlossen sowie der Radiallüfter 24 eingeschaltet sind. Der erste Strömungspfad erstreckt sich somit vom Kühler 10 entlang der Längsrichtung des Luftführkanals 14 zum Kühler 12 und dem Radiallüfter 24. Dadurch wird im Betrieb des Radiallüfters 24 in dieser (Ein-)Stellung der Kühlvorrichtung 8 Luft axial über beide Kühler 10, 12 angesaugt, wodurch eine besonders hohe Kühlleistung möglich ist.

In der Fig. 3 ist der zweite Strömungspfad des Luftführkanals 14 oder die zweite Einstellung der Kühlvorrichtung 8 dargestellt, bei welchem die Verschließvorrichtung 28 geöffnet und die Luftführung 20 geöffnet sowie die Luftführung 22 geschlossen und der Radiallüfter 24 ausgeschaltet sind. Die Luftführung 20 ist hierbei um die Schwenkachse 20a um einen Schwenkwinkel 32 aus der Schließstellung in die Offenstellung verschwenkt, so dass der Luftführungskanal 14 zur Fahrzeugrückseite hin geöffnet wird. Dadurch kann der Luftstrom beziehungsweise der Fahrtwind an dem schräggestellten Kühler 12 vorbei durch die Durchgangsöffnung 16 hindurchströmen.

In der zweiten Einstellung verblockt der durch den Kühler 10 einströmende axiale Luftstrom den Radiallüfter 24, so dass der Luftstrom beziehungsweise der Fahrtwind in Richtung des Kühlers 12 und des Radiallüfters 24 im Wesentlichen gesperrt ist. Dadurch wird der Luftstrom beziehungsweise der Fahrtwind vom Kühler 10 entlang der Längsrichtung des Luftführungskanals 14 über die erste Durchgangsöffnung 16 geführt.

Der dritte Strömungspfad des Luftführkanals 14 beziehungsweise die dritte Einstellung der Kühlvorrichtung 8 ist in der Fig. 4 gezeigt. In dieser Einstellung sind die Verschließvorrichtung 28 und die Luftführung 20 geschlossen, die Luftführung 22 ist geöffnet und der Radiallüfter 24 ist eingeschaltet. Die Luftführung 22 ist hierbei um die Schwenkachse 22a um einen Schwenkwinkel 34 aus der Schließstellung in die Offenstellung verschwenkt, so dass der Luftführungskanal 14 zur Fahrzeugvorderseite hin geöffnet wird.

Der Schwenkwinkel 34 der Luftführung 22 in der dritten Einstellung ist (betragsmäßig) kleiner als der Schwenkwinkel 32 der Luftführung 20 in der zweiten Einstellung.

In der dritten Einstellung tritt der Luftstrom nicht über den Kühler 10, sondern über die Durchgangsöffnung 18 in den Luftführungskanal 14 ein. Im Betrieb saugt der Radiallüfter 24 somit Luft über die Durchgangsöffnung 22 und den Kühler 12 an.

Verfahrensgemäß ist es vorgesehen, dass in Abhängigkeit des Arbeitsbereichs, der elektromotorischen Belastung, des jeweiligen Fahrzyklus und/oder der Geschwindigkeit des Kraftfahrzeugs 2 zwischen den Strömungspfaden des Luftführkanals 14 oder den Einstellungen der Kühlvorrichtung 8 umgeschaltet wird, so dass für jede Betriebssituation eine optimale Kühlleistung bereitgestellt ist.

Zu diesem Zwecke ist ein Schwellwert in einem Speicher des Controllers 30 hinterlegt. Während des Betriebs empfängt der Controller 30 Sensorsignale von dem Elektromotor 4 und/oder von der Batterie 6, anhand welcher er beispielsweise ein Maß für die Fahrzeuggeschwindigkeit oder den Arbeitsbereich des Kraftfahrzeugs 2 bestimmt. Im Betrieb vergleicht der Controller 30 dieses bestimmte Maß mit dem hinterlegten Schwellwert, und versendet in Abhängigkeit von diesem Schwellwertvergleich die Steuersignale SR, SV, SL1, SL2, so dass die unterschiedlichen Strömungspfade - und somit Kühlleistungen - eingestellt werden.

Nachfolgend ist ein Ausführungsbeispiel des Verfahrens in Abhängigkeit von der Fahrzeuggeschwindigkeit beschrieben.

Oberhalb des Schwellwertes, also oberhalb eines bestimmten Geschwindigkeitswerts des Kraftfahrzeugs 2 schaltet der Controller auf den zweiten Strömungspfad beziehungsweise auf die zweite Einstellung. Der Schwellwert ist hierbei insbesondere derart dimensioniert, dass bei einem Erreichen oder Überschreiten ein hinreichend starker Fahrtwind für die Kühlung vorhanden ist.

Dies bedeutet, dass bei einem Erreichen oder Überschreiten des Schwellwertes der Radiallüfter 24 ausgeschaltet, die Luftführung 20 und die Verschließvorrichtung 28 geöffnet, sowie die Luftführung 22 geschlossen wird. Die Kühlvorrichtung 8 wird also beispielswiese bei einer Schnellfahrt auf den zweiten Strömungspfad eingestellt. Bei höherer, hoher und/oder maximaler Fahrzeuggeschwindigkeit, d. h. bei einer Schnellfahrt oder bei hoher Belastung des Elektromotors, z. B. bei Bergfahrten und/oder bei einer zusätzlichen Beanspruchung aufgrund eines vom Kraftfahrzeug gezogenen Anhängers, ist der passive Betrieb durch die Fahrwinddurchströmung des Kühlers 10 besonders geeignet um den Elektromotor 4 und/oder die Batterie 6 zu kühlen.

Unterhalb des Schwellwertes der Geschwindigkeit, beispielsweise bei einer Langsamfahrt oder einem Stillstand des Kraftfahrzeugs 2, wird die Luftführung 20 und die Verschließvorrichtung 28 geschlossen, die Luftführung 22 geöffnet, sowie der Radiallüfter 24 eingeschaltet. Dadurch wird eine ausreichende Kühlleistung beispielsweise an einer roten Ampel oder in einem Fahrzeugstau gewährleistet, bei welchem kein ausreichender Fahrtwind zur Kühlung vorhanden ist.

Wird die Batterie 6 des Kraftfahrzeugs 2 aufgeladen, also befindet sich das Kraftfahrzeug 2 in einem Lade- oder Schnelllademodus, schaltet der Controller 30 die Kühlvorrichtung 8 auf den ersten Strömungspfad. Während des Ladevorgangs wird die Batterie 6 mit hohen elektrischen Strömen gespeist, wobei die dadurch entstehende hohe Temperaturbelastung durch die hohe Kühlleistung der ersten Einstellung zuverlässig und betriebssicher kühlbar ist.

Im Lademodus oder Ladebetrieb steuert der Controller 30 die Komponenten 20, 22, 24 28 derart an, dass die Verschließvorrichtung 28 geöffnet, die Luftführungen 20, 22 geschlossen, und der Radiallüfter 24 eingeschaltet ist. Der von dem Radiallüfter 24 erzeugte und geförderte Luftstrom wird sowohl durch den Kühler 10 als auch durch den Kühler 12 geführt, wodurch eine besonders hohe Kühlleistung realisiert ist. Dadurch wird die Batterie 6 auch während eines Schnellladens zuverlässig und betriebssicher gekühlt.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 2: Kraftfahrzeug
- 4: Elektromotor
- 6: Batterie
- 8: Kühlvorrichtung
- 10, 12: Wärmetauscher/Kühler
- 14: Luftführungskanal
- 16, 18: Durchgangsöffnung
- 20, 22: Luftführung
- 20a, 22a: Dreh-/Schwenkachse
- 24: Kühlerlüfter/Radiallüfter
- 25: Antrieb
- 26: Neigungswinkel
- 28: Verschließvorrichtung
- 30: Controller
- 32, 34: Schwenkwinkel

- SR, SV, SL1, SL2: Steuersignal

## Patentansprüche

1. Kühlvorrichtung (8) zur Kühlung eines elektrisch angetriebenen oder antreibbaren Kraftfahrzeugs (2), aufweisend
- einen ersten Wärmetauscher (10) und einen zweiten Wärmetauscher (12),
- einen den ersten Wärmetauscher (10) und den zweiten Wärmetauscher (12) verbindenden Luftführungskanal (14) mit zwei diametral gegenüberliegenden Durchgangsöffnungen (16, 18), welche mit einer ersten Luftführung (20) und mit einer zweiten Luftführung (22) reversibel verschließbar sind, und
- einen strömungstechnisch hinter dem zweiten Wärmetauscher (12) angeordneten Kühlerlüfter (24),
**dadurch gekennzeichnet,**
**dass** die erste Luftführung (20) druckgesteuert ist.

2. Kühlvorrichtung (8) zur Kühlung eines elektrisch angetriebenen oder antreibbaren Kraftfahrzeugs (2), aufweisend
- einen ersten Wärmetauscher (10) und einen zweiten Wärmetauscher (12) sowie einen strömungstechnisch hinter dem zweiten Wärmetauscher (12) angeordneten Kühlerlüfter (24),
- wobei der erste Wärmetauscher (10) und der zweite Wärmetauscher (12) die Stirn-Seiten eines länglichen Luftführungskanals (14) bilden,
- wobei der zweite Wärmetauscher (12) gegenüber dem ersten Wärmetauscher (10) um einen Neigungswinkel (26) zwischen 30° bis 60° geneigt angeordnet ist,
- wobei zwei diametral gegenüberliegende Durchgangsöffnungen (16, 18) quer oder radial zur sich zwischen den Wärmetauschern (10, 12) erstreckenden Längsrichtung an den Seitenflächen des Luftführkanals (14) angeordnet sind, und
- wobei die Durchgangsöffnungen (16, 18) mit einer ersten Luftführung (20) und mit einer zweiten Luftführung (22) reversibel verschließbar sind.

3. Kühlvorrichtung (8) nach Anspruch 1 oder 2,
**dadurch gekennzeichnet,**
**dass** der Kühlerlüfter (24) als ein Radiallüfter ausgeführt ist.

4. Kühlvorrichtung (8) nach Anspruch 1 oder 3,
**dadurch gekennzeichnet,**
**dass** der zweite Wärmetauscher (12) gegenüber dem ersten Wärmetauscher (10) um einen Neigungswinkel (26) geneigt angeordnet ist.

5. Kühlvorrichtung (8) nach einem der Ansprüche 1 bis 4,
**dadurch gekennzeichnet,**
**dass** die erste Luftführung (20) gegenüberliegend und um 180° gedreht zur zweiten Luftführung (22) angeordnet ist.

6. Kühlvorrichtung (8) nach einem der Ansprüche 1 bis 5,
**dadurch gekennzeichnet,**
**dass** eine Verschließvorrichtung (28) zum strömungstechnischen Verschlie-βen des ersten Wärmetauschers (10) vorgesehen ist.

7. Kühlvorrichtung (8) nach einem der Ansprüche 2 bis 5,
**dadurch gekennzeichnet,**
**dass** die erste Luftführung (20) druckgesteuert ist.

8. Kühlvorrichtung (8) nach einem der Ansprüche 1 bis 7,
**dadurch gekennzeichnet,**
**dass** der Luftführungskanal (14) durch die Luftführungen (20, 22) und/oder den Kühlerlüfters (24) zwischen drei Strömungspfaden umschaltbar ist.

9. Kühlvorrichtung (8) nach einem der Ansprüche 1 bis 8,
**dadurch gekennzeichnet,**
**dass** ein Controller (30) vorgesehen und dazu eingerichtet ist, in Abhängigkeit des Fahrbetriebs oder des Arbeitsbereichs des Kraftfahrzeugs (2) die erste Luftführung (20) und/oder die zweite Luftführung (22) sowie den Kühlerlüfter (24) anzusteuern.

10. Kühlvorrichtung (8) nach Anspruch 9,
**dadurch gekennzeichnet,**
**dass** ein Schwellwert der Fahrzeuggeschwindigkeit oder des Arbeitsbereichs vorgegeben ist,
- oberhalb dessen die erste Luftführung (20) geöffnet und die zweite Luftführung (22) geschlossen sowie der Radiallüfter ausgeschaltet ist, und
- unterhalb dessen die erste Luftführung (20) und die zweite Luftführung (22), insbesondere beim Ladebetrieb einer Batterie (6) für einen elektromotorischen Antrieb des Kraftfahrzeugs (2), geschlossen sind und der Kühlerlüfter (24) eingeschaltet ist.

11. Verfahren zum Betrieb einer Kühlvorrichtung (8) nach einem der Ansprüche 1 bis 10, bei dem in Abhängigkeit des Arbeitsbereichs und/oder der Geschwindigkeit des Kraftfahrzeugs der Kühlerlüfter (24) eingeschaltet und die erste Luftführung (20) und/oder die zweite Luftführung (22) betätigt werden,
- wobei oberhalb eines Schwellwertes der Geschwindigkeit des Kraftfahrzeugs der Kühlerlüfter (24) ausgeschaltet sowie die erste Luftführung (20) geöffnet und die zweite Luftführung (22) geschlossen wird, und
- wobei unterhalb des Schwellwertes, insbesondere bei Fahrzeugstillstand, die erste Luftführung (22) geschlossen und die zweite Luftführung (20) geöffnet sowie der Kühlerlüfter (24) eingeschaltet wird.

12. Verfahren nach Anspruch 11, wobei bei einem Kraftfahrzeug (2) mit einem von einer aufladbaren Batterie (6) gespeisten Elektromotor (4) im Ladebetrieb der Batterie (6) beide Luftführungen (20, 22) geschlossen werden und der Kühlerlüfter (24) eingeschaltet wird.

## Claims

1. Cooling device (8) for cooling an electrically driven or driveable motor vehicle (2), having
- a first heat exchanger (10) and a second heat exchanger (12),
- an air-guiding channel (14) which connects the first heat exchanger (10) and the second heat exchanger (12) and which has two diametrically opposite passage openings (16, 18) which are able to be reversibly closed off by way of a first air guide (20) and by way of a second air guide (22), and
- a cooler fan (24) which is arranged behind the second heat exchanger (12) in terms of flow,
**characterized**
**in that** the first air guide (20) is pressurecontrolled.

2. Cooling device (8) for cooling an electrically driven or driveable motor vehicle (2), having
- a first heat exchanger (10) and a second heat exchanger (12) and also a cooler fan (24) which is arranged behind the second heat exchanger (12) in terms of flow,
- wherein the first heat exchanger (10) and the second heat exchanger (12) form the end faces of an elongate air-guiding channel (14),
- wherein the second heat exchanger (12) is arranged inclined at an inclination angle (26) of between 30° and 60° in relation to the first heat exchanger (10),
- wherein two diametrically opposite passage openings (16, 18) are arranged on the side surfaces of the air-guiding channel (14) transversely or radially with respect to the longitudinal direction that extends between the heat exchangers (10, 12), and
- wherein the passage openings (16, 18) are able to be reversibly closed off by way of a first air guide (20) and by way of a second air guide (22).

3. Cooling device (8) according to Claim 1 or 2,
**characterized**
**in that** the cooler fan (24) is in the form of a radial fan.

4. Cooling device (8) according to Claim 1 or 3,
**characterized**
**in that** the second heat exchanger (12) is arranged inclined at an inclination angle (26) in relation to the first heat exchanger (10).

5. Cooling device (8) according to one of Claims 1 to 4,
**characterized**
**in that** the first air guide (20) is arranged oppositely and so as to be rotated through 180° with respect to the second air guide (22).

6. Cooling device (8) according to one of Claims 1 to 5,
**characterized**
**in that** provision is made of a closure device (28) for closing off the first heat exchanger (10) in terms of flow.

7. Cooling device (8) according to one of Claims 2 to 5,
**characterized**
**in that** the first air guide (20) is pressurecontrolled.

8. Cooling device (8) according to one of Claims 1 to 7,
**characterized**
**in that** the air-guiding channel (14) is able to be switched between three flow paths by way of the air guides (20, 22) and/or the cooler fan (24).

9. Cooling device (8) according to one of Claims 1 to 8,
**characterized**
**in that** a controller (30) is provided and is configured for activating the first air guide (20) and/or the second air guide (22) and also the cooler fan (24) in a manner dependent on the driving operation or on the working range of the motor vehicle (2).

10. Cooling device (8) according to Claim 9,
**characterized**
**in that** a threshold value of the vehicle speed or of the working range is predefined,
- above which threshold value the first air guide (20) is open and the second air guide (22) is closed and also the radial fan is switched off, and
- below which threshold value the first air guide (20) and the second air guide (22), in particular during charging operation of a battery (6) for an electromotive drive of the motor vehicle (2), are closed and the cooler fan (24) is switched on.

11. Method for operating a cooling device (8) according to one of Claims 1 to 10, in which the cooler fan (24) is switched on, and the first air guide (20) and/or the second air guide (22) are/is actuated, in a manner dependent on the working range and/or on the speed of the motor vehicle,
- wherein, above a threshold value of the speed of the motor vehicle, the cooler fan (24) is switched off and also the first air guide (20) is opened and the second air guide (22) is closed, and
- wherein, below the threshold value, in particular in the case of a vehicle standstill, the first air guide (22) is closed and the second air guide (20) is opened and also the cooler fan (24) is switched on.

12. Method according to Claim 11, wherein, in the case of a motor vehicle (2) having an electric motor (4) which is fed by a chargeable battery (6), both air guides (20, 22) are closed, and the cooler fan (24) is switched on, during the charging operation of the battery (6).

## Revendications

1. Dispositif de refroidissement (8) pour le refroidissement d'un véhicule automobile (2) entraîné ou entraînable électriquement, présentant
- un premier échangeur de chaleur (10) et un deuxième échangeur de chaleur (12),
- un canal de guidage d'air (14) reliant le premier échangeur de chaleur (10) et le deuxième échangeur de chaleur (12), avec deux ouvertures de passage (16, 18) diamétralement opposées, qui peuvent être fermées de manière réversible par un premier guide d'air (20) et par un deuxième guide d'air (22), et
- un ventilateur de refroidisseur (24) agencé après le deuxième échangeur de chaleur (12) en termes d'écoulement,
**caractérisé en ce que**
le premier guide d'air (20) est commandé en pression.

2. Dispositif de refroidissement (8) pour le refroidissement d'un véhicule automobile (2) entraîné ou entraînable électriquement, présentant
- un premier échangeur de chaleur (10) et un deuxième échangeur de chaleur (12) ainsi qu'un ventilateur de refroidisseur (24) agencé après le deuxième échangeur de chaleur (12) en termes d'écoulement,
- le premier échangeur de chaleur (10) et le deuxième échangeur de chaleur (12) formant les côtés frontaux d'un canal de guidage d'air allongé (14),
- le deuxième échangeur de chaleur (12) étant agencé de manière inclinée par rapport au premier échangeur de chaleur (10) d'un angle d'inclinaison (26) compris entre 30° et 60°,
- deux ouvertures de passage (16, 18) diamétralement opposées étant agencées sur les surfaces latérales du canal de guidage d'air (14), transversalement ou radialement par rapport à la direction longitudinale s'étendant entre les échangeurs de chaleur (10, 12), et
- les ouvertures de passage (16, 18) pouvant être fermées de manière réversible par un premier guide d'air (20) et par un deuxième guide d'air (22).

3. Dispositif de refroidissement (8) selon la revendication 1 ou 2, **caractérisé en ce que** le ventilateur de refroidisseur (24) est réalisé sous la forme d'un ventilateur radial.

4. Dispositif de refroidissement (8) selon la revendication 1 ou 3, **caractérisé en ce que** le deuxième échangeur de chaleur (12) est agencé de manière inclinée d'un angle d'inclinaison (26) par rapport au premier échangeur de chaleur (10).

5. Dispositif de refroidissement (8) selon l'une quelconque des revendications 1 à 4, **caractérisé en ce que** le premier guide d'air (20) est agencé à l'opposé du deuxième guide d'air (22) et tourné de 180°.

6. Dispositif de refroidissement (8) selon l'une quelconque des revendications 1 à 5, **caractérisé en ce qu'**il est prévu un dispositif de fermeture (28) pour fermer le premier échangeur de chaleur (10) en termes d'écoulement.

7. Dispositif de refroidissement (8) selon l'une quelconque des revendications 2 à 5, **caractérisé en ce que** le premier guide d'air (20) est commandé en pression.

8. Dispositif de refroidissement (8) selon l'une quelconque des revendications 1 à 7, **caractérisé en ce que** le canal de guidage d'air (14) peut être commuté entre trois voies d'écoulement par les guides d'air (20, 22) et/ou le ventilateur de refroidisseur (24).

9. Dispositif de refroidissement (8) selon l'une quelconque des revendications 1 à 8, **caractérisé en ce qu'**un contrôleur (30) est prévu et adapté pour commander le premier guide d'air (20) et/ou le deuxième guide d'air (22) ainsi que le ventilateur de refroidisseur (24) en fonction du mode de marche ou de la plage de travail du véhicule automobile (2).

10. Dispositif de refroidissement (8) selon la revendication 9, **caractérisé en ce qu'**une valeur seuil de la vitesse du véhicule ou de la plage de travail est prédéfinie,
- au-dessus de laquelle le premier guide d'air (20) est ouvert et le deuxième guide d'air (22) est fermé et le ventilateur radial est désactivé, et
- au-dessous de laquelle le premier guide d'air (20) et le deuxième guide d'air (22) sont fermés, notamment dans le mode de charge d'une batterie (6) pour un entraînement par moteur électrique du véhicule automobile (2), et le ventilateur de refroidisseur (24) est activé.

11. Procédé d'exploitation d'un dispositif de refroidissement (8) selon l'une quelconque des revendications 1 à 10, dans lequel le ventilateur de refroidisseur (24) est activé et le premier guide d'air (20) et/ou le deuxième guide d'air (22) sont actionnés en fonction de la plage de travail et/ou de la vitesse du véhicule automobile,
- au-dessus d'une valeur seuil de la vitesse du véhicule automobile, le ventilateur de refroidisseur (24) étant désactivé et le premier guide d'air (20) étant ouvert et le deuxième guide d'air (22) étant fermé, et
- en dessous de la valeur seuil, notamment lors de l'arrêt du véhicule, le premier guide d'air (22) étant fermé et le deuxième guide d'air (20) étant ouvert et le ventilateur de refroidisseur (24) étant activé.

12. Procédé selon la revendication 11, dans lequel, dans un véhicule automobile (2) avec un moteur électrique (4) alimenté par une batterie rechargeable (6), les deux guides d'air (20, 22) sont fermés et le ventilateur de refroidisseur (24) est activé dans le mode de charge de la batterie (6).
